(19) Europäisches Patentamt
European Patent Office
Office européen des brevets

(11) Veröffentlichungsnummer : **0 121 196**
**B1**

(12) # EUROPÄISCHE PATENTSCHRIFT

(45) Veröffentlichungstag der Patentschrift : **12.11.86**

(51) Int. Cl.[4] : **A 01 N 43/42**

(21) Anmeldenummer : **84103227.9**

(22) Anmeldetag : **23.03.84**

(54) **Pflanzenwachstumsregulierende Mittel.**

(30) Priorität : **23.03.83 HU 96283**

(43) Veröffentlichungstag der Anmeldung : **10.10.84 Patentblatt 84/41**

(45) Bekanntmachung des Hinweises auf die Patenterteilung : **12.11.86 Patentblatt 86/46**

(84) Benannte Vertragsstaaten : **AT BE CH DE FR GB IT LI NL SE**

(56) Entgegenhaltungen :
**DE-A- 3 207 021**
**CHEMICAL ABSTRACTS, Band 98, Nr. 21, 23. Mai 1983, Seite 376, Nr. 176047h, Columbus, Ohio, USA; R. MUELLER et al.:"Toxicity and phototoxicity of acridine derivatives and coordination compounds"**

(73) Patentinhaber : **BIOGAL GYOGYSZERGYAR**
**Pallagi u. 13.**
**H-4042 Debrecen (HU)**

(72) Erfinder : **Kovács, Antal, Dr.**
**Lehel u. 14**
**H-4042 Debrecen (HU)**
Erfinder : **Pòlya, Lásziò, Dr.**
**Dòczy u. 4**
**H-4042 Debrecen (HU)**
Erfinder : **Pásztor, Károly, Dr., Dipl.-Landw.**
**Darabos u. 18**
**H-4042 Debrecen (HU)**
Erfinder : **Erdei, János, Dr.**
**Andaházi u. 8**
**H-4042 Debrecen (HU)**
Erfinder : **Pepò, Pál, Dipl.-Landw.**
**Böszörményi u. 140**
**H-4042 Debrecen (HU)**
Erfinder : **Pepò, Péter, Dipl.-Landw.**
**Böszörményi ut 140**
**H-4042 Debrecen (HU)**
Erfinder : **Kiss, Gyorgy, Dr. Dipl.-Landw.**
**Damjanich 26/a**
**Budapest (HU)**
Erfinder : **Kajati, István, Dipl.-Landw.**
**Pusztaszeri u. 27/c**
**Budapest (HU)**
Erfinder : **Kováts, Károly**
**Martonfalvi u. 22, Fsz. 1**
**H-4032 Debrecen (HU)**
Erfinder : **Nagy, János, Dr.**
**Hatvani I. u. 24**
**H-4042 Debrecen (HU)**

(74) Vertreter : **Beszédes, Stephan G. Dr.**
**Münchener Strasse 80a Postfach 1168**
**D-8060 Dachau (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft die Verwendung bestimmter Acridinverbindungen zur Wachstumsregulierung von Pflanzen.

Es ist bekannt, daß in der Landwirtschaft zur Verbesserung der Erträge und zur Erhöhung der Qualität der Produkte Verfahren, wie Sortenveredelung, komplexer Pflanzenschutz, Bodenverbesserung, Kunstdüngen und Bewässerung, schon verhältnismäßig lange in Gebrauch sind. Eine neue Möglichkeit zur Erhöhung der Ernteerträge wurde durch die Verwendung von pflanzlichen Hormonen beziehungsweise pflanzenwachstumsregulierenden Mitteln erschlossen (Turner [1972], Outlook Agr. 7, 14).

Es wurde der Wirkungsmechanismus der natürlichen Pflanzenhormone untersucht ; hormonartig wirkende Substanzen wurden in technischem Maßstab hergestellt. Diese Stoffe, wie Auxine, Gibberelline, Cytokinine, Äthylenbildner und Inhibitoren, greifen in die Lebensvorgänge der Pflanze ein und können dadurch beispielsweise das Keimen, das Wachstum, die Blüte und die Fruchtreife beschleunigen oder verzögern, die Widerstandsfähigkeit gegen Frost und Trockenheit erhöhen, das « Niederlegen » von Getreide verhindern und den Gehalt an Proteinen und essentiellen Aminosäuren vergrößern (T. Dease [1978], World Farm 20, 8 bis 9, 1 415 ; Farm. Chemicals [1978], 141, 3, 42 ; ungarische Patentschrift 175 568).

Die Verwendung der pflanzenwachstumsregulierenden Mittel erhöht nicht nur den Ertrag, sondern beeinflußt auch die Qualität oder bietet agrotechnische Vorteile (Nickell, L. G. [1982], Plant Growth Regulators, Edn. Springer Verlag Berlin-Heidelberg-New York ; US-PS 4 116 675 ; japanische Patentschrift 44 676).

Trotz der vielversprechenden Anwendungsmöglichkeiten ist die Verwendung der pflanzenwachstumsregulierenden Mittel in der Praxis viel geringer, als es nach den geschilderten Vorteilen zu erwarten wäre. Etwa 70 % des Marktanteiles der pflanzenwachstumsregulierenden Mittel entfallen auf insgesamt 8 Präparate ; die meisten der bisher gefundenen Substanzen sind nämlich pflanzenwachstumshemmende Stoffe (I. I. Batch : Plant Growth Regulators in Crop Management, Symposium on Bioscience, 20. bis 21. April 1982, Szeged, Ungarn).

Bei der Verwendung der handelsüblichen Mittel muß mit folgenden Nachteilen gerechnet werden :

a) Bei den meisten der Präparate fällt die optimale Aufwandmenge in einen sehr engen Konzentrationsbereich, das heißt, daß sie leicht « überdosiert » werden können und dann die gewünschte Wirkung nicht eintritt.

b) Der Erfolg der Behandlung hängt von klimatischen Faktoren ab.

c) Bei verholzenden mehrjährigen Pflanzen hat der Zustand der Pflanze im Vorjahr eine entscheidende Bedeutung.

d) Manche der pflanzenwachstumsregulierenden Mittel sind nur dann wirksam, wenn die Behandlung in einem ganz bestimmten vegetativen Stadium der Pflanze vorgenommen wird.

e) Die unterschiedlichen Pflanzenarten reagieren in unterschiedlicher Weise auf die pflanzenwachstumsregulierenden Mittel.

Schließlich ist es eine Tatsache, daß zwar in Garten- und Gewächshauskulturen mit pflanzenwachstumsregulierenden Mitteln schon beachtliche Ergebnisse erzielt wurden, jedoch für die auf großen Flächen angebauten landwirtschaftlichen Nutzpflanzen, wie für Mais, Soja, Reis und Weizen, ein wirklich wirksamer Stimulator nicht zur Verfügung steht (T. Dease [1978], World Farm. 20, 8 bis 9, 1415).

Der Erfindung liegt die Aufgabe zugrunde, unter Behebung der Nachteile des Standes der Technik pflanzenwachstumsregulierende Wirkstoffe mit überlegener umfassender das Pflanzenwachstum anregender Wirkung bereit zu stellen, deren Aufwandmengen in einem weiten Bereich optimal sind, deren Wirkung allgemeiner und weniger von den Bedingungen und dem Zustand der Pflanzen abhängt und auf welche die Pflanzen in gleichem Sinne ansprechen.

Das Obige wurde überraschenderweise durch die Erfindung erreicht.

Erfindungsgemäß wurde nämlich überraschenderweise festgestellt, daß die im folgenden festgelegten 3,6-Di-(amino)-acridin-N-glykoside auf das Wachstum der Pflanzen anregend einwirken. Diese Feststellung ist überraschend, denn im Fachschrifttum ist keine Angabe darüber zu finden, daß Acridinderivate als pflanzenwachstumsregulierende Mittel in der Landwirtschaft anwendbar sind.

Gegenstand der Erfindung ist daher die Verwendung von 3,6-Di-(amino)-acridin-N-glykosiden der allgemeinen Formel

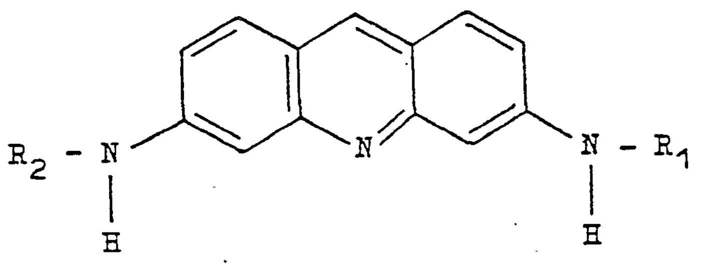

(I)

und/oder Säureadditionssalzen derselben der allgemeinen Formel

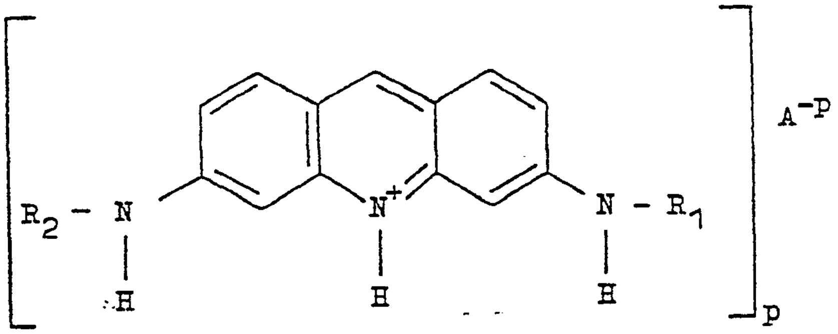

(II)

worin

$R_1$ und $R_2$ unabhängig voneinander für α- oder β-(D)- oder α- oder β-(L)- oder α- oder β-(DL)-Glucosyl-, -Galaktosyl-, -Mannosyl-, -Xylosyl-, -Arabinosyl-, -Ribosyl-, -6-(Desoxy)-glucosyl-, -6-(Desoxy)-galaktosyl-, -Rhamnosyl-, -Maltosyl-, -2-(Acetamido)-2-(desoxy)-glucosyl-, -Lactosyl-, -Cellobiosyl-, Gentiobiosyl- oder -Laminaribiosylreste stehen ; oder

$R_1$ einen α- oder β-(D)- oder α- oder β-(L)- oder α- oder β-(DL)-Glucosyl-, -Galaktosyl-, -Mannosyl-, -Xylosyl-, -Arabinosyl-, -Ribosyl-, -6-(Desoxy)-glucosyl-, -6-(Desoxy)-galaktosyl-, -Rhamnosyl-, -Maltosyl-, -2-(Acetamido)-2-(desoxy)-glucosyl-, -Lactosyl-, -Cellubiosyl-, -Gentiobiosyl- oder -Laminaribiosylrest bedeutet und

$R_2$ Wasserstoff darstellt,

A für einen Säurerest steht und

p 1,2 oder 3 ist,

als Wirkstoff, zweckmäßig zusammen mit einem üblichen Träger- und/oder Hilfsstoff zur Regulierung des Pflanzenwachstums.

Die 3,6-Di-(amino)-acridin-N-glykoside der allgemeinen Formel I und ihre Säureadditionssalze der allgemeinen Formel II sind aus der DT-OS-32 07 021 bekannt, ihre Wirkung auf das Pflanzenwachstum ist jedoch wie bereits erwähnt neu. Auf zahlreiche Acridinderivate setzt die Krebsforschung große Hoffnungen und auch an den bekannten 3,6-Di-(amino)-acridin-N-glykosiden der allgemeinen Formel I sind bisher lediglich pharmakologische Wirkungen beobachtet worden.

Nachdem es daher bekannt war, daß die aus der DE-OS 32 07 021 bekannten Verbindungen eine pharmakologische Aktivität besitzen, war es überraschend, daß sie auch eine pflanzenwachstumsregulierende Wirkung zeigen.

In der aus « Chemical Abstracts », Bd. 98, Nr. 21, 23. Mai 1983, Seite 376, Nr. 176047h referierten Literaturstelle ist von einer Phytotoxizität von Acridin, Aminoacridin und ihren Derivaten sowie ihre Koordinationsverbindungen gegenüber Candida albicans die Rede, falls diese Verbindungen in Lösung in wasserfreiem Dimethylsulfoxid eingesetzt werden. Es wird ferner angegeben, daß ähnliche Verbindungen eine herbizide Wirkung gegenüber Chlorella vulgaris und Rettich-Cotyledonen zeigen, wobei die wachstumsinhibierende Aktivität proportional zu der Konzentration der jeweiligen Verbindungen in wäßriger Lösung ist.

Davon ganz abgesehen, daß in dieser Veröffentlichung nicht die spezifischen 3,6-Di-(amino)-acridin-N-glykoside der oben angegebenen Formel I bzw. deren Säureadditionssalze der Formel II angesprochen werden, handelt es sich darüber hinaus bei der in diesem bekannten Falle beschriebenen Wirkung um eine pflanzenwachstumhemmende Wirkung und nicht um eine das Pflanzenwachstum begünstigende Wirkung, die nur den ganz spezifischen erfindungsgemäß definierten Substanzen zukommt, die eine enge Auswahl von Acridinderivaten darstellen.

Es wurde überraschenderweise festgestellt, daß mit den 3,6-Di-(amino)-acridin-N-glykosiden der allgemeinen Formel I und/oder ihren Säureadditionssalzen der allgemeinen Formel II behandeltes Saatgut beziehungsweise Saatknollen 1 bis 5 Tage schneller keimen als das unbehandelte Blindversuchsmaterial. Der Grad der Anregung hängt von der Pflanzenart ab. In den meisten Fällen keimten die behandelten Samenkörner nicht nur schneller, sondern auch signifikant besser, das heißt, daß die prozentuale Keimung (Stück Keime je 100 Körner) besser war, was besonders für Saatgut, dessen Keimkraft durch die Lagerung gelitten hat, von Bedeutung ist.

Durch die Wirkung der Behandlung mit den erfindungsgemäßen pflanzenwachstumsregulierenden Wirkstoffen war auch die Wurzelentwicklung intensiver, die Gesamtmasse der Wurzeln und die Anzahl der Seitenwurzeln stieg an. Die Keimblätter und die nachfolgenden Blätter hatten eine intensivere grüne Farbe und infolge ihres höheren Chlorophyllgehaltes verläuft wahrscheinlich auch die Photosynthese energischer.

Durch die schnellere Keimung und die kräftigere Wurzelbildung wiesen die mit den erfindungsgemäßen pflanzenwachstumsregulierenden Wirkstoffen behandelten Pflanzen in den meisten Fällen auch eine größere Grünmasse auf, und zwar nicht nur am Anfang, sondern je nach der jeweiligen Pflanzenart in mehr oder weniger ausgeprägtem Maße über die gesamte Vegetationsperiode hinweg. Auf Grund dieser

Beobachtungen wurden auch Freilandversuche vorgenommen, die ergaben, daß die erfindungsgemäßen pflanzenwachstumsregulierenden Wirkstoffe den Ernteertrag erhöhen. Positive Ergebnisse wurden in erster Linie bei Mais, Reis, Soja, Sonnenblumen, Zuckerrüben, Weizen, Mohn und Paprika erzielt.

Außer diesen allgemeinen, mehr oder weniger für alle untersuchten Pflanzenarten gültigen Beobachtungen wurden an einzelnen Pflanzenarten die folgenden konkreten Wirkungen festgestellt.

Bei Hülsenfrüchten stieg neben der Wurzelmasse auch die Anzahl der Wurzelknöllchen (Rhizobium) stark an. Bei Mohn wurde die Pflanzenhöhe gleichmäßiger und auch an den Seitentrieben wuchsen Blüten beziehungsweise Mohnkapseln, wodurch der Ertrag an Kapseln und an Mohn anstieg. Da auch der Alkaloidgehalt höher war, konnte wesentlich mehr Alkaloid gewonnen werden. Bei Mais stieg die Anzahl der Verzweigungen der Blüte an. Bei Soja war die Anzahl der Hülsenetagen größer. Bei Reis waren die Ähren länger und enthielten mehr Körner. Zuckerrüben und Weizen wiesen einen signifikant höheren Chlorophyllgehalt auf. Bei Sonnenblumen waren die Stengel niedriger und dicker, der Fruchtteller größer und der Ertrag höher.

Überraschend ist der komplexe Charakter der Wirkung der erfindungsgemäßen pflanzenwachstumsregulierenden Wirkstoffe. Die bekannten pflanzenwachstumsregulierenden Wirkstoffe wirken gut unterscheidbar entweder auf das Wurzelwachstum oder auf die Triebbildung oder auf die Entwickung der generativen Organe. Die erfindungsgemäßen pflanzenwachstumsregulierenden Wirkstoffe wirken dagegen komplex und auf die ganze Pflanze anregend. Beim Behandeln zum Beispiel von Reis vor der Blüte durch Besprühen tritt nicht nur eine schnellere Reife ein, sondern auch der Ertrag wird größer. Zahlreiche pflanzenwachstumsregulierende Wirkstoffe, zum Beispiel die in der HU-PS 176 514 bebeschriebenen, wirken nur dadurch ertragssteigernd, daß sie das vegetative Wachstum hemmen und auf diese Weise eine größere Pflanzendichte ermöglichen. Die erfindungsgemäßen pflanzenwachstumsregulierenden Wirkstoffe hemmen in manchen Fällen ebenfalls das vegetative Wachstum, wie bei Mohn und Sonnenblume, gleichzeitig erhöhen sie jedoch die Anzahl der Fruchtkörper, wie Kapseln und Fruchtteller, und die Konzentration der Gehaltsstoffe, wie Alkaloide.

Mit den erfindungsgemäßen pflanzenwachstumsregulierenden Wirkstoffen kann schließlich die Harmonie zwischen der genetisch bedingten Leistungsfähigkeit der Nutzpflanze und den Bedingungen der Umgebung hergestellt werden. Die hier noch offenen Möglichkeiten werden besonders augenfällig, wenn an den großen Unterschied zwischen der Leistungsfähigkeit einer Pflanze im Phytotron und ihrer Leistungsfähigkeit im Freiland gedacht wird.

Aus dem Obigen geht hervor, daß die erfindungsgemäßen pflanzenwachstumsregulierenden Wirkstoffe auch in Form von Gemischen von 3,6-Di-(amino)-acridin-N-glykosiden der allgemeinen Formel I und/oder Säureadditionssalzen der allgemeinen Formel II derselben vorliegen können.

Die Säureadditionssalze der allgemeinen Formel II können vorteilhaft Hydrohalogenide, insbesondere Hydrochloride und/oder Hydrobromide, Sulfate und/oder Phosphate sein und entsprechend kann sich der Säurerest, für den A steht, vorteilhaft von einer dieser Säuren ableiten.

Vorzugsweise ist in Formel II p. 1.

Die 3,6-Di-(amino)-acridin-N-glykoside der allgemeinen Formel I können gemäß der DT-OS 32 07 021 hergestellt werden. Auch die Herstellung der Säureadditionssalze, zum Beispiel der Hydrochloride, Hydrobromide, Sulfate und Phosphate, ist zum Teil in dieser Druckschrift beschrieben und kann zum anderen Teil nach an sich bekannten Verfahren erfolgen.

Die erfindungsgemäßen pflanzenwachstumsregulierenden Wirkstoffe der allgemeinen Formel I und/oder Säureadditionssalz(e) derselben der allgemeinen Formel II werden vorteilhaft in Mengen von 0,01 bis 95 Gew.-%, insbesondere 0,01 bis 70 Gew.-%, verwendet und als Rest ein üblicher Träger- und/oder Hilfsstoff, wie Zubereitungshilfsstoff, Füllstoff und/oder Streckmittel, und gegebenenfalls anderer Zusatzstoff eingesetzt.

Die Wirkstoffe können in an sich bekannter Weise zu pflanzenwachstumsregulierenden Präparaten, zum Beispiel Lösungen, Stäubemitteln, Emulsionen, Suspensionen, Pasten oder Granulaten, verarbeitet werden. Das Bereiten dieser Präparate wird zweckmäßig in der Weise durchgeführt, daß die Wirkstoffe mit den Träger- und/oder Hilfsstoffen vermischt und gegebenenfalls ein oberflächenaktiver Stoff, Stabilisator und anderer Zusatzstoff zugegeben wird.

Als Trägerstoffe kommen vor allem Wasser, Dimethysulfoxyd, Dimethylformamid, n-Propanol, Äthylenglykol beziehungsweise Propylenglykol, aber auch Kohlenwasserstoffe, Chlorkohlenwasserstoffe, Ketone, wie Aceton und/oder Cyclohexanon, beziehungsweise Mineralölfraktionen sowie Gemische von solchen in Frage. Dabei ist Dimethylsulfoxyd bevorzugt. Als feste Trägerstoffe können in erster Linie Mineralstoffe, Gesteinsmehl(e), Tonerde, Kaolin, Talk beziehungsweise Diatomeenerde, aber auch organische Stoffe, vor allem Abfallbeziehungsweise Nebenprodukte der Landwirtschaft, wie ausgelaugte Rübenschnitzel beziehungsweise gemahlene Maisstrünke, sowie Gemische von solchen dienen.

Die erfindungsgemäßen pflanzenwachstumsregulierenden Wirkstoffe sind chemisch stabil und verträglich und können deshalb zusammen mit anderen in der Landwirtschaft üblicherweise eingesetzten Stoffen, zum Beispiel Mikroelementen und/oder insektizid und/oder fungizid wirksamen Substanzen, in einem einzigen verfahrenstechnischen beziehungsweise technologischen Schritt ausgebracht werden.

Mit den erfindungsgemäßen pflanzenwachstumsregulierenden Wirkstoffen können dann durch Verdünnen die üblichen Anwendungsformen, wie Spritzbrühen und Beizen, bereitet werden.

Die Anwendung der erfindungsgemäßen pflanzenwachstumsregulierenden Wirkstoffe kann in an

sich bekannter Weise, zum Beispiel in Form des Saatgutbeizens, erfolgen. Das Saatgutbeizen kann durch Eintauchen des Saatgutes in eine Wirkstofflösung, durch Beizen mit trockenem oder feuchtem Wirkstoffpulver, durch Aufsprühen der Wirkstoffbeizlösung oder durch Fixieren der Wirkstoffbeize auf dem Saatgut mit Hilfe eines Haftungsvermittlers, zum Beispiel von Xanthan (siehe Merck Index IX, Verbindung 9719), vorgenommen werden. Der Wirkstoff gelangt mit dem Saatgut in die Erde, und, wenn das Saatgut Bodenwasser aufzunehmen beginnt, mit sehr gutem Wirkungsgrad in das Samenkorn. Zum Beizen werden vorzugsweise 0,5 bis 2,5 kg Wirkstoff(e) je Tonne Saatgut verwendet.

Da die Wirkstoffe auch systemisch wirken, können sie auch durch Gießen oder Besprühen des Pflanzenbestandes verwendet werden. Auf diese Weise können die Pflanzen auch nach dem Auflaufen in bestimmten Vegetationsabschnitten gezielt behandelt werden. Der optimale Zeitpunkt und die optimale Dosis hängen von der jeweiligen Pflanzenart ab und können vom Fachmann auf Grund seines Fachwissens leicht durch Reihenversuche ermittelt werden. Infolge der geringen Phytotoxizität Wirkstoffe ist auch eine etwaige Überdosierung ungefährlich. Für das Ausbringen im Sprühverfahren haben sich Aufwandmengen von 0,1 bis 3,75 kg je Hektar als besonders günstig erwiesen. Die gute Löslichkeit der Wirkstoffe in fett- und wachsartigen Substanzen erleichtert das Eindringen in die Pflanze. Dies kann mit penetrationsfördernden Lösungsmitteln, zum Beispiel Dimethylsulfoxyd, noch verbessert werden.

Die Wirkung der erfindungsgemäßen Wirkstoffe als Pflanzenwachstumsregulatoren wurde sowohl im Laboratorium als auch in Freilandversuchen an zahlreichen Pflanzenarten erprobt.

Die Erfindung wird an Hand der folgenden Beispiele näher erläutert.

## A) Präparatebeispiele

In diesen ist unter « Produktform » das für den Handel bestimmte Präparat, das vor der Anwendung noch verdünnt werden muß, zu verstehen. Unter « Anwendungsform » ist das anwendungsfertige Präparat zu verstehen. Die arabischen Ziffern der Präparatebeispiele entsprechen den in den Anwendungsbeispielen zur Kennzeichnung der verwendeten Präparate erscheinenden.

### Beispiel 1

Produktform

Es wurde aus

50 Gew.-% 3,6-Di-(β-D-glucopyranosylamino)-acridin,
40 Gew.-% Dimethylsulfoxyd und
10 Gew.-% Wasser

ein Präparat hergestellt. Es wurde vor der Anwendung auf die gewünschte Konzentration verdünnt.

### Beispiel 2

Produktform

Es wurden

5 Gew.-% 3-(Amino)-6-(β-D-glucopyranosylamino)-acridinhydrochlorid,
1 Gew.-% Wasser und
94 Gew.-% Dimethylsulfoxyd

miteinander vermischt. Vor der Anwendung wurde das Präparat auf die gewünschte Konzentration verdünnt.

### Beispiel 3

Produktform

Es wurden

12,5 Gew.-% 3,6-Di-(α-L-rhamnopyranosylamino)-acridin,
65,0 Gew.-% Dimethylsulfoxyd und
22,5 Gew.-% Wasser

miteinander vermischt. Das Präparat wurde vor der Anwendung mit Wasser auf die gewünschte Konzentration verdünnt.

Beispiel 4

Produktform

Es wurden

40 Gew.-% 3,6-Di-(α-D-ribopyranosylamino)-acridin,
50 Gew.-% Dimethylsulfoxyd und
10 Gew.-% Wasser

miteinander vermischt. Vor der Anwendung wurde das Präparat auf die gewünschte Konzentration verdünnt.

Beispiel 5

Produktform

Es wurden

25 Gew.-% 3,6-Di-(β-D-lactopyranosylamino)-acridin,
65 Gew.-% Dimethylsulfoxyd und
10 Gew.-% Wasser

miteinander vermischt. Vor der Anwendung wurde das Präparat mit Wasser auf die gewünschte Konzentration verdünnt.

Beispiel 6

Produktform

Es wurden

30 Gew.-% 3-(β-D-Glucopyranosylamino)-6-(α-L-rhamnopyranosylamino)-acridin,
3 Gew.-% n-Propanol und
67 Gew.-% Wasser

miteinander vermischt. Vor der Anwendung wurde das Präparat mit Wasser auf die gewünschte Konzentration verdünnt.

Beispiel 7

Produktform

Es wurden

15 Gew.-% 3,6-Di-(β-D-glucopyranosylamino)-acridin,
10 Gew.-% 3-(Amino)-6-(β-D-glucopyranosylamino)-acridin,
5 Gew.-% Äthylenglykol,
2 Gew.-% Dimethylsulfoxyd und
68 Gew.-% Wasser

miteinander vermischt. Vor der Anwendung wurde das Präparat mit einer 1 gew.-%-igen Lösung des Polysaccharides Xanthan (oder eines anderen handelsüblichen Haftungsvermittlers) im Gewichtsverhältnis von 1 : 1 vermischt und dann mit dem zu behandelnden Saatgut auf die gewünschte Konzentration (kg Wirkstoff je Tonne Saatgut) verdünnt.

Beispiel 8

Anwendungsform

Es wurden

0,01 Gew.-% 3,6-Di-(β-D-glucopyranosylamino)-acridin,
1,00 Gew.-% Dimethylsulfoxyd und
98,99 Gew.-% Wasser

miteinander vermischt. Das Präparat könnte unmittelbar zum Besprühen des Pflanzenbestandes verwendet werden.

Beispiel 9

Produkt- und Anwendungsform

Es wurden

95 Gew.-% 3,6-Di-(β-D-glucopyranosylamino)-acridin und
5 Gew.-% Talk

miteinander vermischt. Das Präparat wurde beim Beizen mit dem zu behandelnden Saatgut auf die gewünschte Konzentration verdünnt.

Beispiel 10

Produktform

Es wurden

50 Gew.-% 3,6-Di-(β-D-glucopyranosylamino)-acridin und
50 Gew.-% Kaolin

miteinander vermischt. Vor der Anwendung wurden dem Präparat 2 Gew.-% Wasser zugesetzt und es wurde dann mit dem zu behandelnden Saatgut auf die gewünschte Konzentration verdünnt.

Beispiel 11

Produkt- und Anwendungsform

Es wurden

70 Gew.-% 3,6-Di-(β-D-glucopyranosylamino)-acridin und
30 Gew.-% Talk

miteinander vermischt. Bei der Anwendung wurde das Präparat mit dem zu behandelnden Saatgut auf die gewünschte Konzentration verdünnt.

B) Anwendungsbeispiele

Die in den Anwendungsbeispielen im Freiland angegebenen Ergebnisse sind die Durchschnittswerte von 4 Wiederholungen in Kleinparzellen in zufälliger Anordnung. Die Bezeichnungen der verwendeten Mittel (1, 2, 3, 4, 5, 6, 7, 8, 9, 10 und 11) entsprechen der Numerierung der obigen Präparatebeispiele, in denen das Bereiten der betreffenden Präparate beschrieben ist.

Anwendungsbeispiel I

Keimanregung von Mais (Zea mays) im Laboratorium

Aus den verschiedene Wirkstoffe enthaltenden Präparaten wurden durch Verdünnen mit Wasser Beizflüssigkeiten mit identischem Wirkstoffgehalt bereitet. In je 100 ml der Behandlungsflüssigkeit wurden je 100 Körner trockenen Maissaatgutes 16 Stunden lang bei 25 °C eingeweicht. Die Dosis entsprach einer Aufwandmenge von 0,5 kg Wirkstoff/t Saatgut.

Die Untersuchung der Keimung wurde nach ISTA (International Rules for Seed Testing ; Proc. Int. Seed Test. Ass. 1966, 31, 1-152) vorgenommen. Dementsprechend wurde das behandelte Saatgut bei 25 °C zwischen mit Wasser befeuchteten Keimpapieren gelagert. Die prozentuale Keimung wurde am 4-ten Tag und die Länge des Triebes am 7-ten Tag ausgewertet.

Die Behandlung im Blindversuch erfolgte durch Einweichen in Leitungswasser.

Die Ergebnisse dieser Versuche sind in der folgenden Tabelle 1 zusammengestellt. Jedes Ergebnis ist der Durchschnitt von 3 Wiederholungen, das heißt 300 Samenkörnern.

(Siehe Tabelle 1 Seite 8 f.)

Tabelle I

| Präparat Beispiel Nr. | Wirkstoff | Keimung in % am 4-ten Tag | Trieblänge in cm am 7-ten Tag |
|---|---|---|---|
| 1 | 3,6-Di-(ß-D-Glucopyranosylamino)-acridin | 100 | 9,8 |
| 2 | 3-(Amino)-6-(ß-D-glucopyranosylamino)-acridinhydrochlorid | 98 | 7,1 |
| 3 | 3,6-Di-(α-L-rhamnopyranosylamino)-acridin | 88 | 9,8 |
| 4 | 3,6-Di-(α-D-ribopyranosylamino)-acridin | 93 | 9,2 |
| 5 | 3,6-Di-(ß-D-lactopyranosylamino)-acridin | 86 | 9,6 |
| 6 | 3-(ß-D-Glucopyranosylamino)-6-(α-L-rhamnopyranosylamino)-acridin | 100 | 8,7 |
| 7 | 3,6-Di-(ß-D-glucopyranosylamino)-acridin und 3-(Amino)-6-(ß-D-glucopyranosylamino)-acridin | 100 | 9,8 |
| Blindversuch | Keiner, nur Leitungswasser | 85 | 6,4 |

Anwendungsbeispiel II

Saatgutbehandlung von Reis (Freiland)

Zur Aussaat bestimmter Reis (Oryza sativa) wurde 17 Stunden lang in einer aus dem Präparat des Beispieles 7 bereiteten Lösung eingeweicht. Die Wirkstoffmenge entsprach 2,5 kg/1 000 kg Saatgut. Die im Freilandversuch im Vergleich zu den in Leitungswasser eingeweichten Blindversuchsproben beobachteten Abweichungen waren wie folgt.

| | |
|---|---|
| Zeitpunkt des Auflaufens | 5 Tage früher |
| Anzahl der Pflanzen je laufenden Meter | um 7 % höher |
| Länge der Ähre | um 10 % länger |
| Kornertrag | um 10,8 Gew.-% höher |

Die größere Anzahl der Pflanzen je laufenden Meter zeigt, daß das prozentuale Auflaufen auch unter Freilandbedingungen verbessert wurde.

Anwendungsbeispiel III

Saatgutbehandlung von Zuckerrühen (Freiland)

Saatgut der Zuckerrübe (Beta vulgaris) wurde mit dem Präparat des Beispieles 11 trocken gebeizt, wobei je Tonne Saatgut 1,25 kg Wirkstoff verwendet wurden. Im Vergleich zu den Blindversuchsproben wurden bei den wichtigsten Parametern die folgenden Abweichnungen beobachtet.

| | |
|---|---|
| Zeitpunkt des Auflaufens | 7 Tage früher |
| Anzahl der Blätter/Pflanze | um 31 % höher |
| Länge des entwickeltsten Blattstengels | um 39 % höher |
| Breite des entwickeltsten Blattes | um 54,6 % größer |
| Rübengewicht bei der Ernte | um 57 Gew.-% größer |
| Schädlicher Stickstoffgehalt | um 9 Gew.-% geringer |
| Ertrag an Reinzucker | um 41,7 Gew.-% höher |

Anwendungsbeispiel IV

Saatgutbehandlung von Erbsen (Freiland)

Zur Aussaat bestimmte Erbsen (Pisum sativum) wurden mit dem Präparat des Beispieles 7 gebeizt, wobei je 1 000 kg Saatgut 0,5 kg Wirkstoff eingesetzt wurde. Im Vergleich zu den Blindversuchsproben wurden folgende Abweichungen beobachtet :

| | |
|---|---|
| Zeitpunkt des Auflaufens | 6 Tage früher |
| Beginn der Blüte | 4 Tage früher |
| Hülsenbildung | 1 Tag früher |
| Völlige Reife | 6 Tage früher |
| Zeitabschnitt der « Zartheit »[1)] | um 10 Tage länger |
| Anzahl der Wurzelknöllchen (Rhizobium) | um 20 % höher |

[1)] Die « Zartheit » ist bei der Herstellung von Schotenkonserven ein Qualitätsparameter. Die Zeitdauer der « Zartheit » beginnt mit der Pflückbarkeit und endet, wenn die Kerne beginnen, mehlig zu werden.

Anwendungsbeispiel V

Saatgutbehandlung von Mohn (Freiland)

Zur Aussaat bestimmter Mohn (Papaver somniferum) wurde in einer aus dem Präparat des Beispieles 5 bereiteten Beizlösung 16 Stunden lang eingeweicht. Je 1 000 kg Saatgut wurde 0,51 kg Wirkstoff eingesetzt. Im Vergleich zu den in Leitungswasser eingeweichten Blindversuchsproben wurden folgende Unterschiede festgestellt : '

| | |
|---|---|
| Zeitpunkt des Auflaufens | 3 Tage früher |
| Hochwachsen des Stengels | 2 Tage später |
| Beginn der Blüte | 2 Tage früher |
| Ende der Blüte | 2 Tage früher |
| Gewicht der rohen Blätter | um 32 Gew.-% geringer |
| Gewicht der rohen Wurzeln | um 21 Gew.-% größer |
| Höhe der Pflanze im blühenden Zustand | um 10 % geringer |
| Anzahl der eine Kapsel tragenden Triebe | um 32,8 % größer |
| Reife | 2 Tage früher |
| Ertrag an Kapseln | um 32 Gew.-% höher |
| Ertrag an Mohnsamen | um 37 Gew.-% höher |
| Auf die gleiche Menge Kapseln bezogener Alkaloidgehalt | um 107,1 Gew.-% höher |
| Morphingehalt | um 107,1 Gew.-% höher |
| Codeingehalt | um 140 Gew.-% höher |
| Tebaingehalt | um 52,7 Gew.-% höher |
| Narcotingehalt | um 64,7 Gew.-% höher |
| Narcotalingehalt | um 84,5 Gew.-% höher |

Anwendungsbeispiel VI

Nachlaufbehandlung von Soja (Freiland)

Es wurden Sojapflanzen im Zweiblattstadium mit dem Präparat des Beispieles 8 durch Besprühen bis zur Tropfnässe behandelt. Die Aufwandmenge betrug 0,1 kg Wirkstoff/ha. Im Vergleich zur Blindversuchsprobe wurden folgende Unterschiede festgestellt :

| | |
|---|---|
| Höhe der Pflanzen bei der Ernte | um 25 % höher |
| Breite der Blätter bei der Ernte | um 32,2 % breiter |
| Länge der Blätter bei der Ernte | um 43,2 % länger |
| Entfernung der untersten Hülse von Boden | um 36 % höher |
| Anzahl der Hülsenetagen | nahezu doppelt so viel (1,92) |
| Trockene Wurzelmasse | um 87,36 Gew.-% größer |
| Ertrag an grünen Hülsen | um 38,7 Gew.-% höher |
| Anzahl der zum Zeitpunkt der Ernte noch vorhandenen Blätter in % der maximalen Blattzahl | 24,7 % mehr Blätter verblieben bis zur Ernte an der Pflanze |

Anwendungsbeispiel VII

Saatgutbeizen und Ultraschallbehandlung (Mais, Freiland)

Zur Aussaat bestimmter Mais wurde mit dem Präparat des Beispieles 1 in einer Aufwandmenge von 0,2 kg Wirkstoff/1 000 kg Saatgut gebeizt und 5 Minuten lang mit Ultraschall behandelt (Apparat Typ KLN, Schwingkopf TI, abgegebene Leistung : 0,7 W/ml). Im Vergleich zu der nur mit Ultraschall behandelten, jedoch nicht gebeizten Blindversuchsprobe wurden folgende Unterschiede beobachtet :

| | |
|---|---|
| Zeitpunkt des Auflaufens | 2 Tage früher |
| Lebensfähigkeit des Keimes | um 7 % höher |
| Pflanzenhöhe | um 10 % höher |
| Blattlänge | um 33 % größer |
| Blattbreite | um 28 % größer |
| Stieldicke | um 8 % größer |
| Anzahl der Kolben/Parzelle | um 8 % höher |
| Gewicht von 1 000 Korn | um 16 Gew.-% höher |
| Korn/Kolben | um 25 % mehr |

**Patentansprüche**

1. Verwendung von 3,6-Di-(amino)-acridin-N-glykosiden der allgemeinen Formel

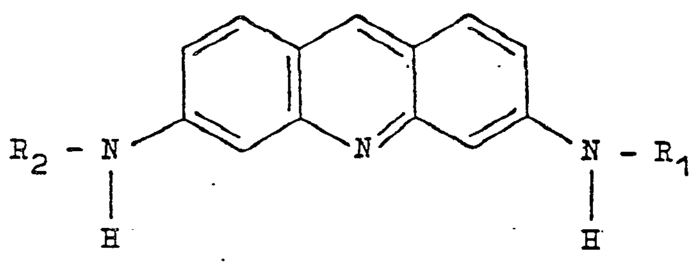

(I)

und/oder Säureadditionssalzen derselben der allgemeinen Formel

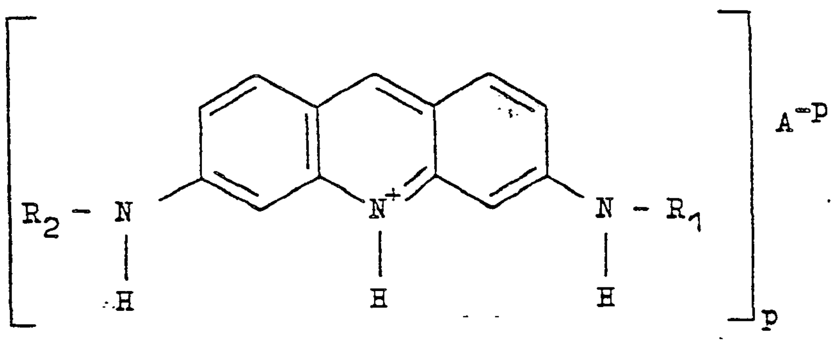

(II)

worin

$R_1$ und $R_2$ unabhängig voneinander für α- oder β-(D)- oder α- oder β-(L)- oder α- oder β-(DL)-Glucosyl-, -Galaktosyl-, -Mannosyl-, -Xylosyl-, -Arabinosyl-, -Ribosyl-, -6-(desoxy)-glucosyl-, -6-(Desoxy)-galaktosyl-,

-Rhamnosyl-, -Maltosyl-, -2-(Acetamido)-2-(desoxy)-glucosyl-, -Lactosyl-, -Cellobiosyl-, Gentiobiosyl- oder -Laminaribiosylreste stehen oder

$R_1$ einen α- oder β-(D)-, α- oder β-(L)- oder α- oder β-(DL)-Glucosyl-, -Galaktosyl-, -Mannosyl-, -Xylosyl-, -Arabinosyl-, -Ribosyl-, -6-(Desoxy)-glucosyl-, -6-(Desoxy)-galaktosyl-, -Rhamnosyl-, -Maltosyl-, -2-(Acetamido)-2-(desoxy)-glucosyl-, -Lactosyl-, -Cellobiosyl-, -Gentiobiosyl- oder -Laminaribiosylrest bedeutet und

$R_2$ Wasserstoff darstellt,

A für einen Säurerest steht und

p 1, 2 oder 3 ist,

als Wirkstoff(en), zweckmäßig zusammen mit üblichen Träger- und/oder Hilfsstoffen zur Regulierung des Pflanzenwachstums.

2. Verwendung nach Anspruch 1, dadurch gekennzeichnet, daß der Wirkstoff 3,6-Di-(β-D-glucopyranosylamino)-acridin, 3-(Amino)-6-(β-D-glucopyranosylamino)-acridinhydrochlorid, 3,6-Di-(α-L-rhamnopyranosylamino)-acridin, 3,6-Di-(α-D-ribopyranosylamino)-acridin, 3,6-Di-(β-D-lactopyranosylamino)-acridin, 3-(β-D-glucopyranosylamino)-6-(α-L-rhamnopyranosylamino)-acridin, 3-(Amino)-6-(β-D-glucopyranosylamino)-acridin oder ein Gemisch derselben ist.

3. Verwendung nach Anspruch 1 oder 2, dadurch gekennzeichnet, daß der Wirkstoffgehalt 0,01 bis 95 Gew.-%, insbesondere 0,01 bis 70 Gew.-%, beträgt.

4. Verwendung nach Anspruch 1 bis 3, dadurch gekennzeichnet, daß der Trägerstoff das Lösungsmittel Dimethylsulfoxyd ist.

**Claims**

1. The use of 3,6-di-(amino)-acridine-N-glykosides of the generic formula

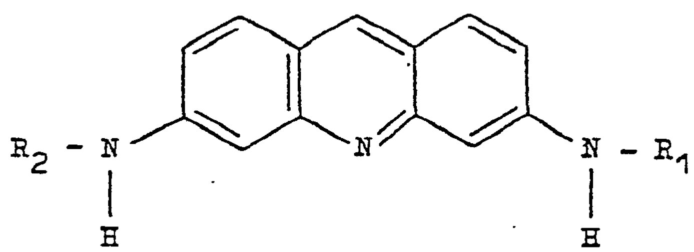

(I)

and/or acid addition salts thereof of the generic formula

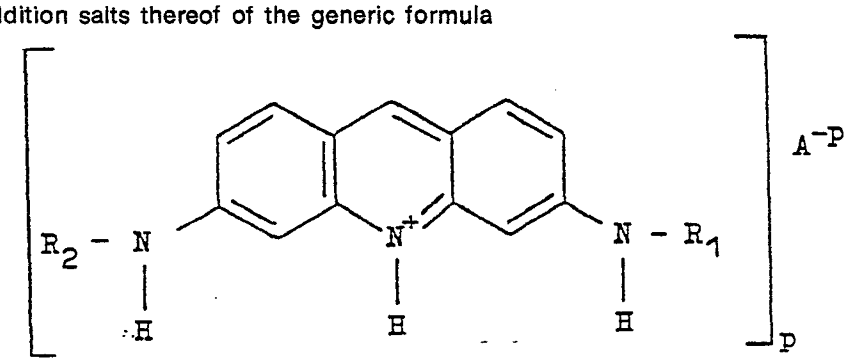

(II)

wherein

$R_1$ and $R_2$ independently from each other are standing for α- or β-(D)- or α- or β-(L)- or α- or β-(DL)-glucosyl-, -galactosyl-, -mannosyl-, -xylosyl-, -arabinosyl-, -ribosyl-, -6-(deoxy)-glucosyl-, -6-(deoxy-galactosyl-, -rhamnosyl-, -maltosyl-, -2-(acetamido)-2-(deoxy)-glucosyl-, -lactosyl-, -cellobiosyl-, gentibiosyl- or -laminaribiosyl radicals or

$R_1$ is α- or β-(D)-, α- or β-(L)- or α- or β-(DL)-glucosyl-, -galactosyl-, -mannosyl-, -xylosyl-, -arabinosyl-, -ribosyl-, -6-(deoxy)-glucosyl-, -6-(deoxy)-galactosyl-, -rhamnosyl-, -maltosyl-, -2-(acetamino)-2-(deoxy)-glucosyl-, -lactosyl-, -cellobiosyl-, -gentiobiosyl- or -laminaribiosyl radical, and

$R_2$ is hydrogen,

A is an acid radical and

p is 1, 2 or 3

as active ingredient(s), preferably together with conventional carriers and/or adjuvants, for the regulation of plant growth.

2. The use according to claim 1, characterised in that the active ingredient is 3,6-di-(β-D-glucopyranosylamino)-acridine, 3-(amino)-6-(β-D-glucopyranosylamino-acrydine hydrochloride, 3,6-di-(α-L-rhamnopyranosylamino)-acridine, 3,6-di-(α-D-ribopyranosylamino)-acridine, 3,6-di-(β-D-lac-

topyranosylamino)-acridine, 3-(β-L-glucopyranosylamino)-6-(α-L-rhamnopyranosylamino)-acridine, 3-(amino)-6-(β-D-glucopyranosylamino)-acridine or a mixture thereof.

3. The use according to claim 1 or 2, characterised in that the active ingredient amounts to 0,01 to 95 % by weight, expecially 0,01 to 70 % by weight.

4. The use according to claim 1 to 3, characterised in that the carrier is the solvent dimethylsulfoxide.

**Revendications**

1. Utilisation comme matières actives pour la régulation de la croissance des plantes de 3,6-di-(amino)-acridine-N-glucoside de formule générale :

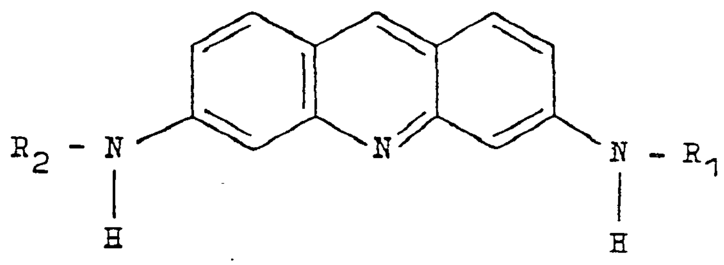

(I)

et/ou de leurs sels d'addition d'acide de formule générale :

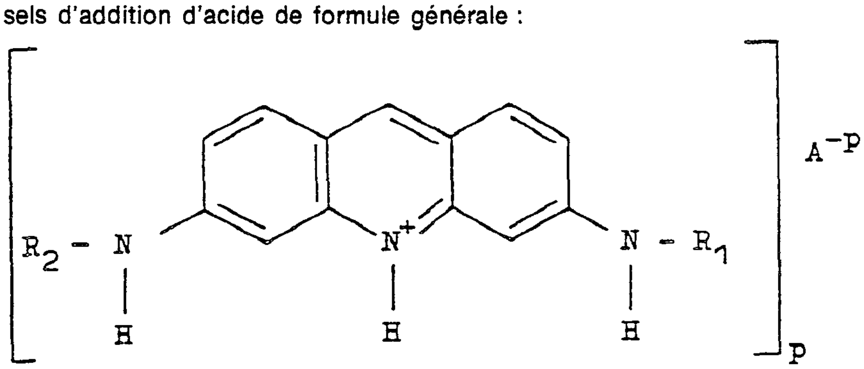

(II)

dans laquelle :

$R_1$ et $R_2$ représentent, indépendamment l'un de l'autre, des résidus : α- ou β-(D)-, ou α- ou β-(L)-, ou α- ou β-(DL)-glucosyle, -galactosyle, -mannosyle, -xylosyle, -arabinosyle, -ribosyle, -6-(desoxy)-glucosyle, -6-(desoxy)-galactosyle, -rhamnosyle, -maltosyle, -2-(acétamido)-2-(desoxy)-glucosyle, -lactosyle, -cellobiosyle, gentiobiosyle, ou -laminaribiosyle, ou

$R_1$ désigne un résidu α- ou β-(D)-, α- ou β-(L)- ou α- ou β-(DL)-glucosyle, -galactosyle, -mannosyle, -xylosyle, -arabinosyle, -ribosyle, -6-(desoxy)-glucosyle, -6-(desoxy)-galactosyle, -rhamnosyle, -maltosyle, -2-(acétamido)-2-(desoxy)-glucosyle, -lactosyle, -cellobiosyle, gentiobiosyle, ou -laminaribiosyle ; et $R_2$ représente l'hydrogène ;

A représente un reste d'acide ; et

p est égal à 1, 2 ou 3 ;

de préférence associé à des matières de support et/ou auxiliaires classiques.

2. Utilisation selon la revendication 1, caractérisée en ce que la matière active est 3,6-di-(β-D-glucopyranosylamino)-amidine, chlorhydrate de 3-(amino)-6-(β-D-glucopyranosylamino)-acridine, 3,6-di-(α-L-rhamnopyranosylamino)-acridine, 3,6-di-(α-D-ribopyranosylamino)-acridine, 3,6-di-(β-D-lactopyranosulamino)-acridine, 3-(β-D-glucopyranosylamino)-6-(α-L-rhamnopyranosylamino)-acridine, 3-(amino)-6-(β-D-glucopyranosylamino)-acridine, ou un mélange desdites substances.

3. Utilisation selon la revendication 1 ou 2, caractérisé en ce que la teneur en matières actives est comprise entre 0,01 et 95 % en poids, notamment entre 0,01 et 70 % en poids.

4. Utilisation selon les revendications 1 à 3, caractérisée en ce que la matière de support est le solvant diméthylsulfoxyde.